# EUROPÄISCHE PATENTSCHRIFT

(11) **EP 1 200 764 B1**
(45) Veröffentlichungstag und Bekanntmachung des Hinweises auf die Patenterteilung: **01.10.2003**
(21) Anmeldenummer: 00949270.3
(22) Anmeldetag: 06.07.2000
(51) Int. Cl.: F16L 3/00

(54) **BEFESTIGUNGSELEMENT ZUR BEFESTIGUNG VON WELLROHREN AN EINEM TRÄGERTEIL**
FIXING ELEMENT FOR FIXING CORRUGATED TUBES TO A SUPPORT PART
ELEMENT DE FIXATION DESTINE A FIXER DES TUBES ONDULES SUR UNE PARTIE SUPPORT

(30) Priorität: 21.07.1999 DE 19934262
(43) Veröffentlichungstag der Anmeldung: 02.05.2002
(73) Patentinhaber: A. Raymond & Cie, 38028 Grenoble (FR)
(72) Erfinder: SILBEREISEN, Friedrich, D-79588 Efringen-Kirchen (DE); TREMMEL, Günter, D-79739 Schwörstadt (DE)
(74) Vertreter: Kirchgaesser, Johannes, Dipl.-Ing.
(86) Internationale Anmeldenummer: EP0006384
(87) Internationale Veröffentlichungsnummer: WO01007813

(56) Entgegenhaltungen:
- GB-A- 954 861
- GB-A- 2 167 799
- US-A- 1 792 728

## Beschreibung

Die Erfindung bezieht sich auf ein Befestigungselement zur Befestigung von Wellrohren an einem Trägerteil, wobei das Befestigungselement mittels eines Befestigungsfußes mit diesem Trägerteil verbindbar ist und Eingriffsmittel aufweist, die mit am Wellrohr vorgesehenen Hinterschneidungen in Eingriff bringbar sind.

Solche Befestigungselemente sind beispielsweise aus der GB-A-2 167 799 bekannt.

Wellrohre dienen dazu, z.B. elektrische Leitungen oder Kabelstränge aufzunehmen, die entlang eines Trägerteils geführt oder verlegt werden sollen. Durch ihre Ausbildung als Wellrohr, d.h. mit gleichmäßig beabstandeten, kreisförmigen Nuten in ihrer Außenfläche, sind sie sehr biegsam, so daß ein Kabelbündel, nach außen abgedeckt und geschützt, beliebig, z.B. der Form eines Trägerteils folgend, platzsparend geführt werden kann. Um ein Wellrohr mit einem darin befindlichen Kabelbündel an seinem Platz zu halten, muß es auf seinem Weg in gewissen Abständen an dem betreffenden Trägerteil befestigt werden. Dazu ist beispielsweise die gerippte Außenfläche des Wellrohrs mit zwei in Längsrichtung spiegelbildlich parallel verlaufenden Hinterschneidungen versehen, die klammerartig von am Trägerteil in bestimmten Abständen angebrachten Befestigungselementen hintergriffen werden können.

Solche Wellrohre gibt es mit verschiedenen Durchmessern. Bei Wellrohren mit verhältnismäßig kleinem Durchmesser und verhältnismäßig dünner Wand fallen naturgemäß auch die erwähnten Hinterschneidungen gering aus, so daß sie für eine Befestigungskiammer eine nur kleine Angriffsfläche bieten und die Befestigung nicht ausreichend sicher erscheinen kann.

Aufgabe der Erfindung ist es, ein Befestigungselement zu schaffen, mit dem sich speziell Wellrohre mit verhältnismäßig kleinem Durchmesser und dementsprechend wenig tief gehenden Hinterschneidungen sicher an einem Trägerteil befestigen lassen.

Erfindungsgemäß wird dies dadurch erreicht, daß mit dem Befestigungsfuß des Befestigungselements eine Führungsschiene fest verbunden ist, in der ein Schieber mit einem darauf fest angeordneten, sich in Einschubrichtung verjüngenden Klemmkeil verschiebbar ist, wobei an einer Seitenwand der Führungsschiene und an der dieser gegenüberliegenden Keilfläche des Klemmkeils spiegelbildlich aufeinander zugerichtete Eingriffskanten ausgebildet sind, die mit an dem zu befestigenden Wellrohr in Längsrichtung spiegelbildlich parallel ausgebildeten Hinterschneidungen in Eingriff bringbar sind und deren gegenseitiger Abstand sich beim Einschieben des Schiebers in die Führungsschiene verringert.

Der Schieber kann in der Führungsschiene zwei Stellungen einnehmen, von denen die eine, in der der Schieber teilweise aus der Führungsschiene herausgezogen ist und der Abstand zwischen den Eingriffskanten der größere ist, die gelöste Stellung ist und die andere, in der der Schieber in die Führungsschiene eingeschoben ist und der Abstand zwischen den Eingriffskanten verringert ist, die gespannte Stellung ist.

In der gelösten Stellung des Schiebers wird das zu befestigende Wellrohr an seinen in Längsrichtung parallel verlaufenden Hinterschneidungen in Eingriff gebracht mit den einen entsprechenden Abstand zueinander haltenden Eingriffskanten, die an der einen Seitenwand der Führungsschiene und an der gegenüberliegenden Keilfläche des Klemmkeils angeformt sind. Wenn danach der Schieber in die Führungsschiene eingeschoben wird, verringert sich durch die Keilwirkung des auf dem Schieber angeordneten Klemmkeils der Abstand zwischen den beiden Eingriffskanten, so daß der Eingriff mit den Hinterschneidungen am Wellrohr festgezogen wird und so auch bei verhältnismäßig geringer Angriffsfläche an den Hinterschneidungen ein sichere Halterung des Wellrohrs gewährleistet ist.

Die Führungsschiene weist einen Boden und Seitenwände mit Führungsflächen für den Schieber auf, und am Boden der Führungsschiene ist vorteilhaft durch Aussparungen eine leicht nach oben gebogene Eingriffszunge mit einer nach oben gerichteten Rastnase ausgebildet, die federnd mit Einkerbungen in Eingriff bringbar ist, die an der Unterseite des Schiebers in einem die gelöste und einem die gespannte Stellung des Schiebers definierenden Abstand vorgesehen sind. Dadurch ist der Schieber in seiner gelösten Stellung unverlierbar in der Führungsschiene gehalten und wird in seiner gespannten Stellung arretiert, so daß ein unbeabsichtigtes Lösen des Wellrohrs aus dem Befestigungselement verhindert wird.

Nach einer Ausführungsform der Erfindung besteht der Schieber aus einem flachen Basisteil, das auf seiner Oberseite den Klemmkeil trägt, und der Schieber ist über eine äußere Keilfläche und eine innere Seitenfläche seines Basisteils an Führungsflächen geführt, die an der einen Seite durch die Seitenwand der Führungsschiene und an der anderen Seite durch eine Abstufung der Seitenwand der Führungsschiene gebildet werden.

Vorzugsweise ist der Schieber auf der einen Seite in einer in der Seitenwand eingeformten, rechteckigen Nut und auf der anderen Seite in einer unterhalb der Abstufung eingeformten, rechteckigen Nut mittels seitlich am Basisteil abstehender Führungsleisten geführt.

Nach einer bevorzugten Ausführungsform der Erfindung verlaufen die an den Seitenwänden der Führungsschiene ausgebildeten Führungsflächen für den Schieber schräg zur Mittellinie des Bodens und das Basisteil des Schiebers steht schräg im selben Winkel, während sowohl die eine, an der inneren Keilfläche ausgebildete Eingriffskante als auch die andere, gegenüberliegend an der einen Seitenwand der Führungsschiene oberhalb der die eine Führungsfläche für das Basisteil des Schiebers bildenden Abstufung ausgebildete Eingriffskante parallel zur Mittellinie des Bodens der Führungsschiene verlaufen. Dadurch wird eine gute Klemmwirkung der Eingriffskanten an den Hinterschneidungen des Wellrohrs erreicht.

Die Erfindung wird im folgenden anhand der anhängenden Zeichnung beispielhaft genauer beschrieben; es zeigen
- Fig. 1: die Seitenansicht eines Wellrohrs mit an der Unterseite in Längsrichtung verlaufenden Hinterschneidungen zu seiner Befestigung,
- Fig. 2: die auf die eine Öffnung gerichtete Ansicht des Wellrohres nach Fig. 1,
- Fig. 3: eine perspektivische Ansicht eines erfindungsgemäßen Befestigugnselements,
- Fig. 4: eine Seitenansicht des Befestigungselements gemäß Fig. 3,
- Fig. 5: die Draufsicht auf das Befestigungselement gemäß Fig. 3,
- Fig. 6: einen Querschnitt durch das Befestigungselement entlang der Schnittlinie VI - VI in Fig. 4 mit eingeklemmter Befestigungsleiste,
- Fig. 7: die Draufsicht auf den Grundkörper des Befestigungselements gemäß Fig. 3,
- Fig. 8: einen Längsschnitt durch den Grundkörper des Befestigungselements entlang der Schnittlinie VIII - VIII in Fig. 7,
- Fig. 9: einen Querschnitt durch den Grundkörper des Befestigungselements entlang der Schnittlinie IX - IX in Fig. 8,
- Fig. 10: eine Draufsicht auf den Schieber des Befestigungselements gemäß Fig. 3,
- Fig. 11: eine Seitenansicht des Schiebers gemäß Fig. 10,
- Fig. 12: einen Querschnitt durch den Schieber entlang der Schnittlinie Xll - Xll in Fig. 11.

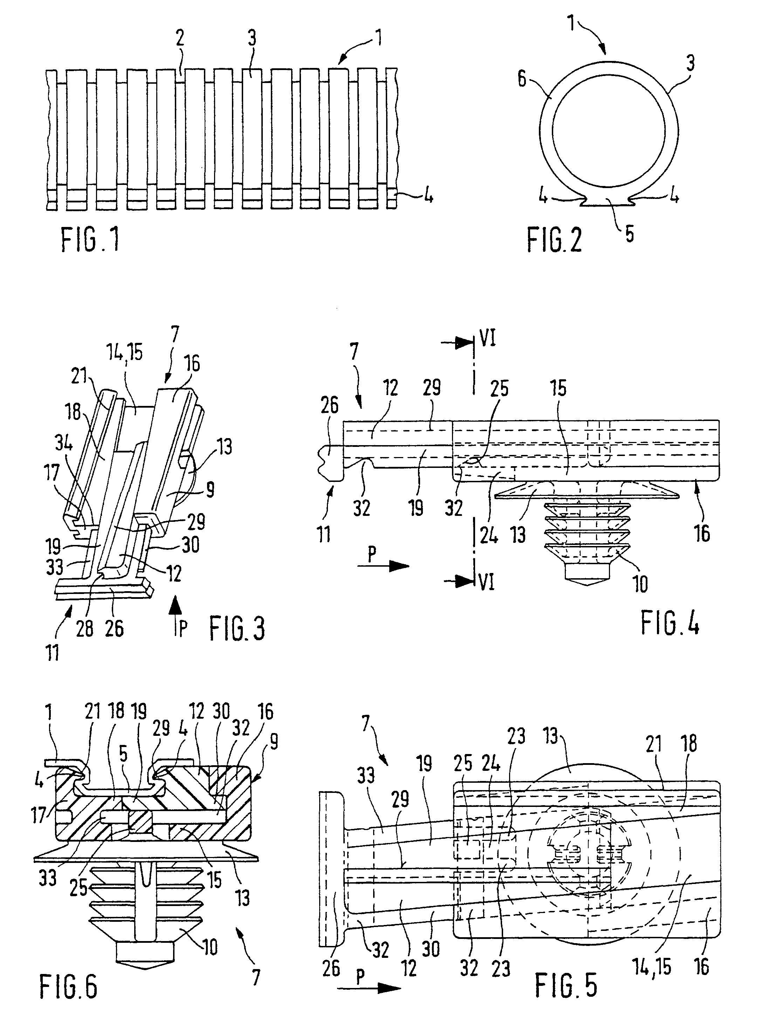

Die Figuren 1 und 2 zeigen einmal in Seitenansicht und einmal mit Blickrichtung auf eine der Öffnungen ein an sich bekanntes Wellrohr **1** mit den durch kreisförmige Nuten **2** in der Mantelfläche entstehenden typischen Rippen **3**, durch die das Wellrohr **1** seine Biegsamkeit erhält. An seiner Unterseite in Fig. 1 und 2 ist das Wellrohr **1** mit zwei in Längsrichtung verlaufenden, spiegelbildlich parallelen Hinterschneidungen **4** versehen, durch die eine an der Mantelfläche des Wellrohrs **1** angeformte Befestigungsleiste **5** entsteht. Bei seiner bestimmungsgemäßen Verwendung kann das Wellrohr **1** in Längsrichtung aufgeschnitten werden, so daß ein zu verlegendes Kabelbündel durch den so entstehenden aufbiegbaren Schlitz in das Wellrohr **1** eingelegt werden kann. Es ist eine Materialeigenschaft des für das Wellrohr **1** bevorzugt zu wählenden Kunststoffs, daß sich der Schlitz nach dem Einlegen eines Kabelbündels wieder schließt.

Das Wellrohr **1** kann mit seiner Befestigungsleiste **5** in ein Befestigungselement, das an einem nicht dargestellten Trägerteil angebracht sein kann, derart eingeschoben oder eingepreßt werden, daß an diesem Befestigungselement vorgesehene Eingriffsmittel die Befestigungsleiste **5** an ihren Hinterschneidungen **4** hintergreifen und so eine sichere Halterung des Weltrohrs **1** am Trägerteil erreicht wird. Der Schlitz für das Einlegen des Kabelbündels in das Wellrohr **1** wird bevorzugt außerhalb der Befestigungsleiste **5** und vorzugsweise ihr gegenüber ausgeführt, so daß auch nachträglich noch einzelne oder mehrere Kabelstränge in dem Wellrohr **1** verlegt werden können. Natürlich ist es auch möglich, ein Kabelbündel durch das ungeschlitzte Wellrohr **1** hindurchzuziehen und dieses mit seiner Befestigungsleiste **5** am Befestigungselement zu verankern. Sollte es in einem speziellen Anwendungsfall vorgezogen werden den Schlitz in der Befestigungsleiste **5**, und dann bevorzugt entlang deren Mittellinie, vorzusehen, so ist dies ebenso möglich. In diesem Fall wird, nachdem die Befestigungsleiste **5** mit ihren Hinterschneidungen **4** an den Eingriffsmitteln des Befestigungselements in Eingriff gebracht worden ist, der Schlitz zusammengepreßt, das Wellrohr **1** sozusagen geschlossen gehalten, was in bestimmten Fällen als zusätzliche Sicherheit angesehen werden kann.

Bei Wellrohren **1** mit verhältnismäßig kleinem Durchmesser und verhältnismäßig dünner Wand **6** fallen die Hinterschneidungen **4** naturgemäß klein aus, so daß sie häufig für bekannte Befestigungselemente nicht die ausreichende Angriffsfläche bieten, um eine wirklich sichere Halterung am Trägerteil zu gewährleisten. Hier soll mit dem erfindungsgemäßen Befestigungselement **7** Abhilfe geschaffen werden.

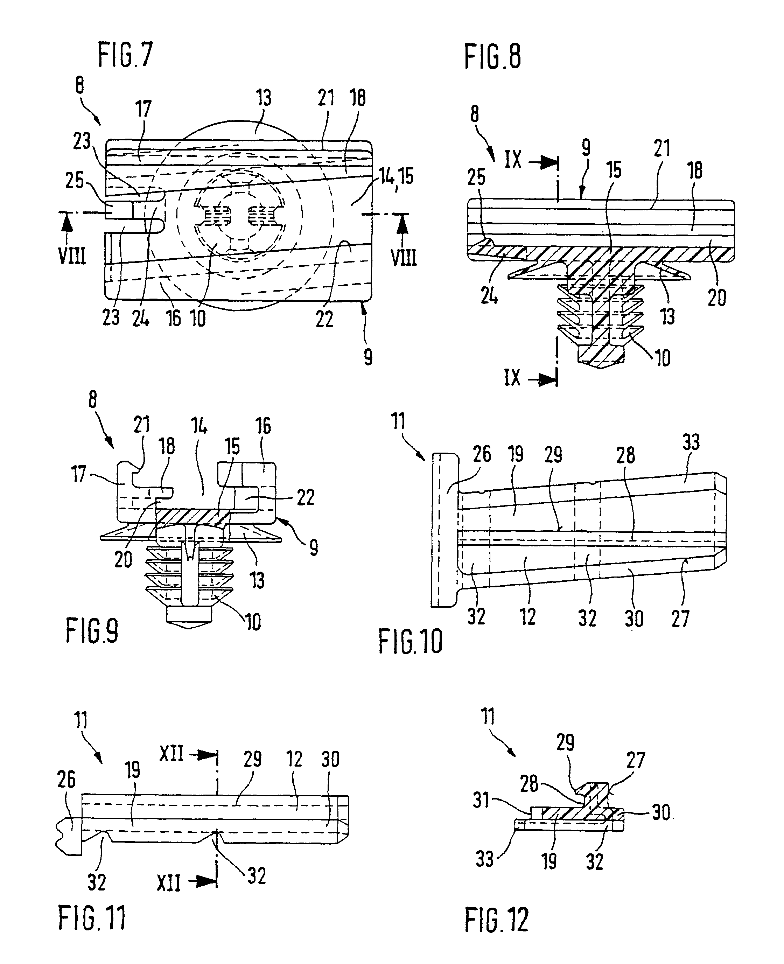

Fig. 3 zeigt eine perspektivische Ansicht des neuen Befestigungselements 7 und Fig. 4 eine Seitenansicht desselben Befestigungselements **7**. Es besteht im wesentlichen aus zwei Teilen, einem Grundkörper **8** mit einer Führungsschiene **9** und einem Befestigungsfuß **10** sowie einem Schieber **11** mit einem Klemmkeil **12** (siehe auch die Fig. 7 bis 12). Wie am besten aus den Figuren 4, 6, 8 und 9 zu erkennen ist, weist der Grundkörper **8** einen an sich bekannten, elastisch verformbaren Befestigungsfuß **10** auf, mit dem er in eine Öffnung eines nicht dargestellten Trägerteils eingesetzt und darin verankert werden kann. Mit einem sich über dem Befestigungsfuß **10** anschließenden kreisförmigen Kragen **13** kann der Grundkörper **8** bzw. das Befestigungselement **7** auf der Oberfläche des Trägerteils aufliegen.

Über diesem Kragen **13** ist die sich in Längsrichtung erstreckende Führungsschiene **9** angeformt. Die Führungsschiene **9** hat eine quaderförmige Grundform, in deren Oberseite eine in Längsrichtung schräg verlaufende Ausnehmung **14** eingeformt ist, so daß ein Boden **15** und zwei Seitenwände **16**, **17** stehen bleiben, von denen die eine Seitenwand **16** sich in Einschubrichtung P des Schiebers **11** (siehe unten) verbreitert und die andere Seitenwand **17** sich in derselben Richtung verjüngt.

Die sich verjüngende Seitenwand **17** weist eine nach innen gerichtete Abstufung **18** auf, die im zusammengebauten Zustand mit dem Basisteil **19** des Schiebers **11** fluchtet und so eine Führungsfläche für den Schieber **11** und eine gemeinsame Auflagefläche für die Befestigungsleiste **5** bildet (siehe Fig. 6). Unterhalb der Abstufung **18** ist eine rechteckige Nut **20** eingeformt, die sich über die Fläche des Bodens **15** erhebt. Das freie Ende der Seitenwand **17** ist so hinterschnitten, daß eine in Längsrichtung geradlinig verlaufende, nach innen gerichtete und spitz zulaufende Eingriffskante **21** entsteht, die, wie in Fig. 6 angedeutet, eine der Hinterschneidungen **4** an der Befestigungsleiste **5** eines Wellrohrs **1** hintergreifen kann.

In der gegenüberliegenden, sich in Einschubrichtung P verbreiternden Seitenwand **16** ist entsprechend der Höhe des Basisteils **19** eine rechteckige Nut **22** vorgesehen, die sich ebenfalls über die Fläche des Bodens **15** erhebt. Am vorderen Ende des Bodens **15** ist durch beidseitige Aussparungen **23** eine leicht nach oben gerichtete Eingriffszunge **24** mit einer nach oben gerichteten Rastnase **25** ausgebildet ( siehe auch Fig. 7 und 8).

In der so gebildeten Führungsschiene **9** des Grundkörpers **8** ist der Schieber **11** (siehe auch Fig. 10 bis 12) verschiebbar angeordnet. Er besteht aus einem im wesentlichen flachen Basisteil **19**, das zu einem T-förmig daran angeformten Betätigungsansatz **26** in einem Winkel geneigt ist, der der schräg verlaufenden Ausnehmung **14** in der Führungsschiene **9** entspricht (siehe Fig. 10). Auf der Oberfläche des Basisteils **19** ist ein sich in Einschubrichtung **P** verjüngender Klemmkeil **12** angeformt. Er erhält seine Keilform dadurch, daß seine äußere Keilfläche **27** im selben Winkel verläuft wie das Basisteil **19**, während seine innere Keilfläche **28** senkrecht zum Betätigungsansatz **26** steht (siehe Fig.10). Die innere Keilfläche **28** ist so hinterschnitten, daß, sobald der Schieber **11** in die Führungsschiene **9** eingeschoben ist, spiegelbildlich zur Eingriffskante **21** an der Seitenwand **17** der Führungsschiene **9** eine zweite Eingriffskante **29** entsteht, die, wie in Fig. 6 angedeutet, die zweite Hinterschneidung **4** an der Befestigungsleiste **5** eines Wellrohrs **1** hintergreifen kann. Die der Keilfläche **27** entgegengesetzte Seitenfläche **31** des Basisteils **19** liegt an der Seitenfläche der Abstufung **18** in der Seitenwand **17** der Führungsschiene **9** an.

Der Schieber **11** kann in der Führungsschiene **9** eine gelöste Stellung und eine gespannte Stellung einnehmen. Dazu weist der Schieber **11** an seiner Unterseite zwei in Längsrichtung beabstandete Einkerbungen **32** auf, in die der Rastfortsatz **25** an der federnd ausgebildeten Eingriffszunge **24** der Führungsschiene **9** einrasten kann (siehe Fig. 11 und 4) und von denen die hintere vorzugsweise unmittelbar anschließend an den Betätigungsansatz **26** ausgebildet ist. Die Fig. 4 und 5 geben das Befestigungselement **7** im gelöster Stellung des Schiebers **11** wieder, d.h. der Rastfortsatz **25** der Eingriffszunge **24** befindet sich im Eingriff mit der vorderen Aussparung **32**, die sich nach der dargestellten Ausführungsform etwa auf halber Länge des Schiebers **11** an dessen Unterseite befindet (Fig. 11). So ist der Schieber **11** in seiner gelösten Stellung unverlierbar im Grundkörper **8** bzw. der Führungsschiene **9** gehalten und das Befestigungselement **7** insgesamt befindet sich in seiner Bereitschaftsstellung.

Der Schieber **11** ist, wie aus Fig. 3 erkenntlich, mittels am Basisteil **19** seitlich abstehender Führungsleisten **30** und **33** in der Führungsschiene **9** geführt. Dazu sind in der Seitenwand **16** der Führungsschiene **9** eine rechteckige Nut **22** und unterhalb der Abstufung **18** eine weitere rechteckige Nut **20** eingeformt, in welchen die Führungsleisten **30** und **33** eingreifen und darin gleiten können.

Bei der bestimmungsgemäßen Anwendung des Befestigungselements **7** wird ein Wellrohr gemäß Fig. 1 und 2, in das z.B. ein Kabelbündel, wie oben beschrieben, eingelegt wurde, mit seiner Befestigungsleiste **5** so in die Führungsschiene **9** mit dem darin sich in seiner gelösten Stellung befindlichen Schieber **11** eingeschoben oder eingedrückt, daß die sich einander gegenüberliegenden Eingriffskanten **21** und **29** an der Führungsschiene **9** und dem Klemmkeil **12** des Schiebers **11** die Führungsleiste **5** des Wellrohrs **1** an den Hinterschneidungen **4** umgreifen (siehe Fig. 6). Danach wird der Schieber **11** in Richtung des Pfeiles P in die Führungsschiene **9** eingeschoben, bis die Rastnase **25** der federnd ausgebildeten Eingriffszunge **24** am Boden **15** der Führungsschiene **9** in die dem Betätigungsansatz **26** näher liegende Einkerbung **32** einrastet und damit der Schieber **11** in dieser gespannten Stellung arretiert wird. Durch die Wirkung des Klemmkeils **12** verringert sich beim Vorschieben des Schiebers **11** in der Führungsschiene **9** der Abstand zwischen der Eingriffskanten **21** an der einen Seitenwand **17** der Führungsschiene **9** und der inneren Keilfläche **28** des Klemmkeils **12** (siehe auch Fig. 12). Die Eingriffskanten **21** und **29** werden hierbei so fest in den Eingriff mit den Hinterschneidungen **4** der Befestigungsieiste **5** des Wellrohrs **1** gepreßt, daß auch bei einer verhältnismäßig kleinen Angriffsfläche für die Eingriffskanten **21**, **29** in den Hinterschneidungen **4** eine sichere Halterung des Wellrohrs **1** in dem Befestigungselement **7** und damit an einem nicht dargestellten Trägerteil gewährleistet ist.

### Bezugszeichenliste:

- 1: Wellrohr
- 2: Nuten
- 3: Rippen
- 4: Hinterschneidungen
- 5: Befestigungsleiste
- 6: Wand
- 7: Befestigungselement
- 8: Grundkörper
- 9: Führungsschiene
- 10: Befestigungsfuß
- 11: Schieber
- 12: Klemmkeil
- 13: Kragen
- 14: Ausnehmung
- 15: Boden
- 16: Seitenwand
- 17: Seitenwand
- 18: Abstufung
- 19: Basisteil
- 20: Nut
- 21: Eingriffskante
- 22: Nut
- 23: Ausparungen
- 24: Eingriffszunge
- 25: Rastnase
- 26: Betätigungsansatz
- 27: äußere Keilfläche
- 28: innere Keilfläche
- 29: Eingriffskante
- 30: Führungsleiste
- 31: Seitenfläche
- 32: Einkerbungen
- 33: Führungsleiste

## Patentansprüche

1. Befestigungselement zur Befestigung von Wellrohren an einem Trägerteil, wobei das Befestigungselement mittels eines Befestigungsfußes mit diesem Trägerteil verbindbar ist und Eingriffsmittel aufweist, die mit am Wellrohr vorgesehenen Hinterschneidungen in Eingriff bringbar sind, **dadurch gekennzeichnet, daß** mit dem Befestigungsfuß (**10**) eine Führungsschiene (**9**) fest verbunden ist, in der ein Schieber (**11**) mit einem darauf fest angeordneten, sich in Einschubrichtung (P) verjüngenden Klemmkeil (**12**) verschiebbar ist, wobei an einer Seitenwand (**17**) der Führungsschiene (**9**) und an der dieser gegenüberliegenden Keilfläche (**28**) des Klemmkeils (**12**) spiegelbildlich aufeinander zugerichtete Eingriffskanten (**21**, **29**) ausgebildet sind, die mit an dem zu befestigenden Wellrohr (**1**) in Längsrichtung spiegelbildlich parallel ausgebildeten Hinterschneidungen (**4**) in Eingriff bringbar sind und deren gegenseitiger Abstand sich beim Einschieben des Schiebers (**11**) in die Führungsschiene (**9**) verringert.

2. Befestigungselement nach Anspruch 1, **dadurch gekennzeichnet, daß** der Schieber (**11**) in der Führungsschiene (**9**) zwei Stellungen einnehmen kann, von denen die eine, in der der Schieber (**11**) teilweise aus der Führungsschiene (**9**) herausgezogen ist und der Abstand zwischen den Eingriffskanten (**21**, **29**) der größere ist, die gelöste Stellung ist und die andere, in der der Schieber (**11**) in die Führungsschiene (**9**) eingeschoben ist und der Abstand zwischen den Eingriffskanten (**21**, **29**) verringert ist, die gespannte Stellung ist.

3. Befestigungselement nach Anspruch 2, **dadurch gekennzeichnet, daß** die Führungsschiene (**9**) einen Boden (**15**) und Seitenwände (**16**, **17**) mit Führungsflächen für den Schieber (**11**) aufweist und daß am Boden (**15**) der Führungsschiene (**9**) durch Aussparungen (**23**) eine leicht nach oben gebogene Eingriffszunge (**24**) mit einer nach oben gerichteten Rastnase (**25**) ausgebildet ist, die federnd mit Einkerbungen (**32**) in Eingriff bringbar ist, die an der Unterseite des Schiebers (**11**) in einem die gelöste und einem die gespannte Stellung des Schiebers (**11**) definierenden Abstand vorgesehen sind.

4. Befestigungselement nach Anspruch 3, **dadurch gekennzeichnet, daß** der Schieber (**11**) aus einem flachen Basisteil (**19**) besteht, das auf seiner Oberseite den Klemmkeil (**12**) trägt, und daß der Schieber (**11**) über eine äußere Keilfläche (**27**) und eine innere Seitenfläche (**31**) seines Basisteils (**19**) an Führungsflächen geführt ist, die an der einen Seite durch die Seitenwand (**16**) der Führungsschiene (**9**) und an der anderen Seite durch eine Abstufung (**18**) der Seitenwand (**17**) der Führungsschiene (**9**) gebildet werden.

5. Befestigungselement nach Anspruch 4, **dadurch gekennzeichnet, daß** der Schieber (**11**) auf der einen Seite in einer in der Seitenwand (**16**) eingeformten rechteckigen Nut (**22**) und auf der anderen Seite in einer unterhalb der Abstufung (**18**) eingeformten rechteckigen Nut (**20**) mittels seitlich am Basisteil (**19**) abstehender Führungsleisten (**30**) und (**33**) geführt ist.

6. Befestigungselement nach Anspruch 3 oder 4, **dadurch gekennzeichnet, daß** die an den Seitenwänden (**16**, **17**) der Führungsschiene (**9**) ausgebildeten Führungsflächen für den Schieber (**11**) schräg zur Mittellinie des Bodens (**15**) verlaufen und das Basisteil (**19**) des Schiebers (**11**) im selben Winkel schräg steht, während sowohl die eine, an der inneren Keilfläche (**28**) ausgebildete Eingriffskante (**29**) als auch die andere, gegenüberliegend an der einen Seitenwand (**17**) der Führungsschiene (**9**) oberhalb der die eine Führungsfläche für das Basisteil (**19**) des Schiebers (**11**) bildenden Abstufung (**18**) ausgebildete Eingriffskante (**21**) parallel zur Mittellinie des Bodens (**15**) der Führungsschiene (**9**) verlaufen.

## Claims

1. A fixing element for fixing corrugated tubes to a support part, wherein the fixing element can be connected to said support part by means of a fixing foot and has engagement means which can be brought into engagement with undercut configurations on the corrugated tube, **characterised in that** fixedly connected to the fixing foot (10) is a guide rail (9) in which there is slidable a slider (11) having a clamping wedge (12) which is arranged fixedly thereon and which tapes in the insertion direction (P), wherein provided at a side wall (17) of the guide rail (9) and at the wedge surface (28), in opposite relationship thereto, of the clamping wedge (12) are engagement edges (21, 29) which are directed towards each other in mirror image relationship and which can be brought into engagement with the undercut configurations (4) provided in parallel mirror image relationship in the longitudinal direction on the corrugated tube (1) to be fixed and the mutual spacing of which decreases upon insertion of the slider (11) into the guide rail (9).

2. A fixing element according to claim 1 **characterised in that** the slider (11) can assume in the guide rail (9) two positions of which the one position in which the slider (11) is partially withdrawn from the guide rail (9) and the spacing between the engagement edges (21, 29) is the greater is the released position and the other position in which the slider (11) is pushed into the guide rail (9) and the spacing between the engagement edges (21, 29) is reduced is the clamped position.

3. A fixing element according to claim 2 **characterised in that** the guide rail (9) has a bottom (15) and side walls (16, 17) with guide surfaces for the slider (11) and that provided by virtue of openings (23) at the bottom (15) of the guide rail (9) is a slightly upwardly curved engagement tongue (24) with an upwardly directed latching projection (25) which can be resiliently engaged with notches (32) which are provided at the underside of the slider (11) at a spacing defining the released and the clamped position of the slider (11).

4. A fixing element according to claim 3 **characterised in that** the slider (11) comprises a flat base portion (19) which on its top side carries the clamping wedge (12), and that the slider (11) is guided by way of an outer wedge surface (27) and an inner side surface (31) of its base portion, (19) at guide surfaces which are formed at the one side by the side wall (16) of the guide rail (9) and at the other side by a step (18) in the side wall (17) of the guide rail (9).

5. A fixing element according to claim 4 **characterised in that** on the one side the slider (11) is guided in a rectangular groove (22) formed in the side wall (16) and on the other side it is guided in a rectangular groove (20) formed beneath the step (18), by means of guide bar portions (30) and (33) projecting laterally on the base portion (19).

6. A fixing element according to claim 3 or claim 4 **characterised in that** the guide surfaces for the slider (11), which are formed at the side walls (16, 17) of the guide rail (9), extend inclinedly with respect to the centre line of the bottom (15) and the base portion (19) of the slider (11) is disposed inclinedly at the same angle while both the one engagement edge (29) provided at the inner wedge surface (28) and also the other engagement edge (21) provided in opposite relationship at the one side wall (17) of the guide rail (9) above the step (18) forming the one guide surface for the base portion (19) of the slider (11) extend parallel to the centre line of the bottom (15) of the guide rail (9).

## Revendications

1. Organe de fixation pour la fixation de tubes ondulés sur un élément formant support, l'organe de fixation étant en l'occurrence destiné à être raccordé à cet élément formant support au moyen d'une patte de fixation et comportant des moyens d'accrochage qui sont destinés à venir s'engager en prise d'encastrement avec des dépouilles prévues dans le tube ondulé **caractérisé en ce que** la patte de fixation (10) est réalisée solidaire d'une glissière (9) dans laquelle un élément coulissant (11), sur lequel est monté à demeure un coin de blocage (12) allant en s'amenuisant dans le sens de l'introduction (P), peut être déplacé, des arêtes de cramponnement (21, 29), orientée-l'une vers l'autre selon une disposition symétrique, étant en l'occurrence prévues sur une paroi latérale (17) de la glissière (9) et sur la surface en forme de coin (28) opposée à celle-ci, du coin de blocage 12), qui sont destinées à être amenées en prise d'encastrement réciproque avec des dépouilles (4) parallèles disposées de manière symétrique dans le plan longitudinal du tube ondulé (1) à fixer et dont l'intervalle d'écartement réciproque se réduit lorsque l'on pousse l'élément coulissant (11 ) dans la glissière (9).

2. Organe de fixation selon la revendication 1, **caractérisé en ce que** l'élément coulissant (11) peut prendre deux positions dans la glissière 9), l'une dans laquelle l'élément coulissant (11) est partiellement sorti de la glissière (9) et dans laquelle l'intervalle d'écartement entre les arêtes de cramponnement (21, 29) est à son maximum, qui correspond à la position de dégagement et l'autre dans laquelle l'élément coulissant (11) est inséré dans la glissière (9) et dans laquelle l'intervalle d'écartement entre les arêtes de cramponnement (21, 29) est restreint, qui correspond à la position de bridage en prise.

3. Organe de fixation selon la revendication 2, **caractérisé en ce que** la glissière (9) se compose d'un fond (15) et de parois latérales (16, 17) comportant des surfaces de guidage pour l'élément coulissant (11) et que dans le fond (15) de la glissière (9) est avantageusement réalisée, au moyen d'évidements (23), une languette d'engagement en prise (24) légèrement repliée vers le haut, comportant un ergot d'accrochage (25) orienté vers le haut, qui peut être amenée, par cédage élastique, en prise d'encastrement avec des encoches (32) qui sont prévues, dans la face inférieure de l'élément coulissant 11), à une distance réciproque correspondant respectivement à la position de dégagement et à la position de bridage en prise de l'élément coulissant 11).

4. Organe de fixation selon la revendication 3, **caractérisé en ce que** l'élément coulissant (11) se compose d'une embase plate (19), portant à sa partie supérieure le coin de blocage (12) et que l'élément coulissant est disposé de manière à pouvoir glisser, au niveau d'une face en forme de coin extérieure (27) et d'une face latérale intérieure (31) de son embase (19), sur des surfaces de guidage, qui sont définies sur un côté par la paroi latérale (16) de la glissière (9) et sur l'autre côté par un décrochement (18) ménagé dans la paroi latérale (17) de la glissière (9).

5. Organe de fixation selon la revendication 4, **caractérisé en ce que** l'élément coulissant (11) est guidé sur un côté dans une rainure de forme rectangulaire (22) ménagée dans la paroi latérale (16) et sur l'autre côté dans une rainure de forme rectangulaire (20) ménagée en dessous du décrochement (18), par des barrettes de guidage (30, 33) faisant latéralement saillie depuis son embase (19).

6. organe de fixation selon la revendication 3 ou 4, **caractérisé en ce que** les surfaces de guidage de l'élément coulissant (11) constituées au niveau des parois latérales (16, 17) de la glissière (9) s'étendent suivant une disposition oblique par rapport à l'axe du fond (15) et que l'embase (19) de l'élément coulissant (11) est disposée obliquement sous un angle identique, tandis qu'aussi bien l'arête de cramponnement (19) prévue au niveau de la face en forme de coin (28) que l'autre arête de cramponnement (21), disposée à l'opposé, au niveau d'une paroi latérale (17) de la glissière (9), au-dessus du décrochement (18) constituant une face de guidage pour l'embase (19) de l'élément coulissant (11), sont parallèles à l'axe du fond (15) de la glissière (9).
